# EUROPEAN PATENT SPECIFICATION

(11) **EP 0 669 473 B1**
(45) Date of publication and mention of the grant of the patent: **20.01.1999**
(21) Application number: 95102794.5
(22) Date of filing: 27.02.1995
(51) Int. Cl.: F16B 37/06, B23P 19/06, B21K 1/70

(54) **Self-attaching fastener, and method of making and installing the same**
Selbstsicherndes Befestigungselement und Verfahren zu dessen Herstellung und Einbau
Elément de fixation autosertissable et son procédé de fabrication et d'installation

(30) Priority: 25.02.1994 JP 51022/94; 22.08.1994 US 293800
(43) Date of publication of application: 30.08.1995
(73) Proprietor: MULTIFASTENER CORPORATION, Detroit, Michigan 48239 (US)
(72) Inventor: Takahashi, Takao, Tokyo 194-02 (JP); Takehara, Hiroshi, Tokyo 192 (JP)
(74) Representative: Morgan, James G.

(56) References cited:
- EP-A- 0 553 822
- FR-A- 2 688 835
- US-A- 3 213 914
- US-A- 3 793 658
- US-A- 3 810 291

## Description

This invention relates to a self-attaching nut fastener in accordance with the preamble of claim 1 and to a method of making the same. More specifically it relates to nut fasteners, such as clinch and pierce nuts which are utilised in mass production applications and which may be attached to a metal panel or plate in a single stroke of a press, to a method of forming such fasteners with increased tool life.

In particular, this application relates to a further development of the fasteners and methods described in EP-A-0 553 822 on which the preamble of claim 1 is based.

Self-clinching nuts and pierce nuts of the type disclosed herein generally include a projecting central pilot portion, which may be used to pierce a metal panel or plate to which the fastener is to be attached and the pilot portion is then received through the pierced panel opening. The nut is then attached to the metal panel by a die member which forms a mechanical interlock between the nut and the panel. The panel may be deformed by the die member into grooves in the nut or the nut may be deformed to entrap panel metal.

Many pierce nuts are used by the automotive industry to assemble cars in which many components of various kinds are attached to metal plates or panels. Pierce nuts are used to attach lamps and sheet metal parts, for example, to the vehicle. When such parts are attached, screws or bolts are threaded into the threaded hole in the nut and a bolt or screw is tightened with rotating tools, such as a torque wrench, at prescribed torque values. The clinch nut must therefore have sufficient anti-torque or rotation resistance (the force that keeps the pierce nut from rotating on the metal plate when a bolt is threaded into the nut and tightened) to bind it to the metal panel. After a component is attached to the clinch nut on a metal plate, external forces, such as vibration and tensile forces applied to the automobile, act upon the nuts from the pull-through direction attempting to pull the nuts from the metal plate to which they are attached. Therefore, each clinch nut must have sufficient pull-through resistance (the force that keeps the nut from coming out of the metal plate when the nut and a bolt are engaged and the force is applied to the bolt perpendicular to the metal plate) that is stronger than these external forces.

As stated, the torque value of the rotating tool or torque wrench is predetermined, such that the rotational resistance of the clinch nut in the panel should be sufficient to resist this torque value, but the external forces applied to the automobile often cannot be forecast. Therefore, the aforementioned pull-through resistance must be relatively high.

When pierce or clinch nuts are being driven into metal plates, the pierce nuts are supplied to the installation tooling continuously through an outlet of a supply device, such as a hopper. Thus, it would be preferred if the shape of the pierce or clinch nut permits free variance of the attachment direction on the surface of the metal plate. In other words, the shape of the pierce nut should permit free variation of the direction that each pierce nut emerges from the outlet of the hopper. In cases in which pierce nuts are to be driven into a metal panel in a number of locations, the pierce nuts should be shaped so that the direction of the pierce nut outlet can be freely varied to suit the installation operation.

Further, in the automotive industry, which utilises many pierce nuts, there is a trend toward thinner metal panels or plates to reduce the weight of each car. Thus, it is necessary to have pierce or clinch nuts shaped to provide the necessary rotation resistance and greater pull-out and pull-through resistance, even when used on thin metal plates. When, for example, it is necessary to achieve pull-out resistance in excess of 200 kg and sufficient rotation resistance to withstand the tightening torque when applied by a torque wrench with a 0.6 mm plate and the bolt or screw meets resistance during engagement of the nut, existing pierce nuts of the type described above cannot consistently satisfy these requirements.

As described above, a pierce or clinch nut is typically attached to a metal panel or plate in conjunction with an installation die commonly referred to as a die button. The die button includes one or more projecting lips or protrusions configured to be received in the nut groove or grooves. When the pierce or clinch nut has an annular groove, the die button includes an annular lip or protrusion configured to be received in the annular groove of the nut. When the self-attaching nut is a pierce nut, the die button typically includes a shearing edge or surface which cooperates with an outside surface of the pilot portion of the pierce nut to pierce an opening in the panel. The pierce nut pilot is then received through the pierced panel opening and the lip or protrusion of the die button then deforms the panel into interlocking relation with the nut groove or grooves. However, as described above, this mechanical interlock must be sufficient to withstand the torque which may be applied to the nut when a bolt is cross-threaded in the nut and tightened and the nut must have sufficient pull-out and pull-through resistance for commercial applications.

With existing die buttons, the material around the pierced panel opening is deformed by the two surfaces formed by the cylindrical outer surface of the circular lip or protrusion on the die button and the annular die face that is perpendicular to this outer surface and by the outside wall of the annular groove in the pierce nut when the panel metal is deformed into the annular groove. Thus, when insufficient panel metal is deformed by the annular lip of the die button, insufficient panel metal is inserted into the groove and it is not possible to increase the mechanical interlock between the panel metal and the groove to achieve the required pull-out strength. When the panel or plate is particularly thin, the volume of panel metal deformed in the groove is insufficient and the nut falls off the plate.

Certain problems developed with the manufacture and installation of the embodiments of the self-attaching nut disclosed in the above-identified EP-A-0 533 822. As will be understood by those skilled in the art, the forming punch used to form the annular groove of the self-attaching nut has an annular lip which conforms to the shape of the bottom of the groove. In the embodiments disclosed, the die lip includes an end face having depressions conforming to the shape of the protuberances, which are aligned in the midportion of the bottom wall of the groove. However, when forming oil adheres to the depressions in the end of the forming punch, the oil cannot escape during formation of the groove. This results in resistance and incomplete forming of the protuberances; however, the protuberances are essential to radial deformation of the metal panel during installation as described in the above-identified parent application. Thus, the pierce nuts disclosed in the above-identified parent patent application does not provide the best possible retention or torque resistance on the panel using conventional forming techniques.

Further, the wall of the pilot portion in the embodiment disclosed in the parent application tends to become thin at the bottom of the groove because the groove inner wall is inclined outwardly. As described in the above-identified parent application, during installation of the nut in a panel, the panel metal is deformed radially inwardly and driven against the inner portion of the annular wall of the pilot, which may result in distortion of the female thread in the nut bore. This has resulted in binding of the screw or bolt as it is threaded into the nut bore following installation of the nut.

In addition, the projecting annular lip of the die button used to install the nut must be relatively thin at the tip as the lip includes an outer annular concave filet which forms the panel metal in the groove as described in the above-referenced EP patent application. This results in weakening of the annular lip and shortened die button life, which is undesirable, particularly in mass production applications.

Certain problems have also arisen in the manufacture of the embodiments of the self-attaching nut disclosed in the above-identified EP-A-0 533 822. As will be understood by those skilled in the art, the forming punch used to form the annular groove of the self-attaching nut generally conforms to the shape of the groove bottom wall, including the protuberances described. The nut is generally formed from a metal blank, preferably a drawn metal rod of cold heading quality steel. The rod is cut to length and partially formed in a conventional cold-heading operation to form the general configuration of the nut, including the pilot portion, flange portion and an annular groove. However, when a conventional cold heading tool or punch was utilised to form the preferred configuration of the bottom of the groove, including the spaced protuberances, it was found that the tool life was insufficient for mass production applications. Thus, it was necessary to modify the method of making the self-attaching nut to improve tool life and certain modifications of the nut configuration have been found desirable to better utilise the improved method proposed herein.

Thus, there is need for improvement of the design of the embodiments of the self-attaching fastener disclosed in the above-referenced parent patent application.

The improved self-attaching nut fastener disclosed in this application significantly improves the life of the die button and permits the full formation of the protuberances using conventional forming techniques, thus improving the manufacturing and installation processes of the pierce nut. Further, the self-clinching fastener or pierce nut may be reliably attached to a thin metal panel or plate providing sufficient pull-out strength and rotational resistance without distortion of the threads in the nut bore.

According to the present invention there is provided a self-attaching nut fastener as claimed in claim 1 and a method of making such a nut fastener as claimed in claim 6.

Self-attaching fasteners of the type disclosed herein are generally used to pierce a hole in the metal panel or plate and the nut is then attached to the panel by a die button, as described. However, as will be understood by persons skilled in the art, the pierce nut of this invention may also be used as a clinch nut, wherein the nut is installed in a panel having a pre-formed panel opening or hole. The fastener of this invention is self-clinching; that is, the nut fastener includes an annular groove and the panel is deformed in the groove to form a mechanical interlock between the panel and the fastener. A self-piercing fastener, however, has several important advantages, particularly in mass production applications. For the description of the invention, therefore, the self-attaching fastener of this invention will sometimes be referred to as a pierce nut. The nut may be formed of steel, such as cold formable 1010 steel.

The cylindrical outer surface of the pilot portion, which in part defines the inner groove wall, permits the use of a forming punch having a thicker annular forming lip and the elimination of a space between the protuberance and the inner groove wall eliminates the requirement for depressions or pockets in the end of the forming punch, thereby substantially improving punch life because forming oil is not entrapped in the pockets.

During installation of the nut on a metal panel, as described herein, panel metal is deformed against the protuberance by the annular lip of the die button; the protuberance then deforms panel metal radially outwardly beneath the inclined outer groove wall, forming a secure installation. The protuberance comprises a plurality of circumferentially spaced protuberances, each of which extend circumferentially around the pilot and radially from the inner wall of the groove to adjacent a midportion of the groove bottom wall. In the most preferred circular form of the nut, the protuberances are semi-circular. In the disclosed embodiment, the protuberances are wedge-shaped, each having a smaller circumferential width adjacent the pilot. Thus, the sides of the protuberances are not exactly "radial," but the protuberances extend radially. As the panel metal is then deformed into the groove, the panel metal is also deformed into radial channels between the semi-circular protuberances and between the radial arcuate ends of the protuberances against the bottom wall and beneath the inclined portion of the grooved outer wall, forming a very secure installation and preventing rotation of the nut on the panel. In the preferred embodiment, the protuberances extend radially from the pilot portion beyond the radial center of the groove bottom wall to define a restricted space between the radial outer extent of the protuberances and the inclined portion of the groove outer wall. The bottom wall of the groove also preferably includes an annular bridging portion integral with the pilot outer surface and the adjacent protuberances further strengthening the annular pilot wall. The annular bridging portions have a radial width substantially less than the protuberances. The protuberances preferably have a generally flat top surface facing the groove opening and may include an arcuate radial outer surface extending from the top surface toward the groove bottom wall; however, the radial surface is not required.

For the sake of completeness, reference should also be made to FR-A-2 688 835 which admittedly discloses protuberances which extend from the wall of the pilot portion. However, the French reference actually teaches away from the present fastener. In the French reference the outer wall of the pilot is inclined and the inner wall of the flange portion, i.e. the outer side wall of the groove, is generally perpendicular to the bottom wall of the groove. The "protuberance", although integral with the pilot will not perform in the same way as the protuberances proposed here, because they do not deform the panel material beneath the inclined wall because they are integral with it. Furthermore, the use of an inclined pilot wall as present in the French reference prevents the use of a punch having an internal diameter which engages the panel adjacent to the pilot to deform the panel metal against the pilot and radially outwardly to form a secure installation.

As described, the self-attaching nut fastener of this invention is particularly adapted for attachment to a plastically deformable metal panel, generally steel.

The resultant nut fastener and panel assembly of this invention thus includes the self-clinching nut fastener described and a plastically deformable metal panel. The panel includes an opening, which is cylindrical in the preferred embodiment, which receives the end of the pilot portion therethrough, which is spaced above the plane of the annular panel-supporting surface of the flange portion. The panel metal is deformed in the annular groove of the nut fastener against the groove bottom wall and beneath the inclined portion of the groove outer wall. In the most preferred embodiment, the panel metal is also deformed against the groove inner wall or outer surface of the pilot, forming a very secure mechanical interlock between the panel and the nut fastener.

As described, the preferred configuration of the self-attaching nut of this invention is circular, including a generally cylindrical outer surface, except as deformed by the final forming punch described above. This permits free orientation of the nut during installation as described above. Further, the outer surface of the pilot, which defines the inner surface of the nut groove, is also preferably cylindrical to accommodate a forming punch which forms the final configuration of the bottom wall of the groove having a radial width which is as wide as possible, further improving the tool life of the groove forming punch. However, the self-attaching nut of this invention may also be polygonal, such as an eight sided nut, which further improves the torque resistance of the nut. For purposes of the description, the self-attaching nut of this invention will be described as annular, which includes polygonal configurations.

Thus, the improved method of making a self-attaching nut fastener of this invention improves the tool life of the tools utilised to make the preferred embodiment of the self-attaching nut, resulting in an improved self-attaching nut suitable for mass production applications. Other advantages and meritorious features of this invention will be more fully understood from the following description of the preferred embodiments, the appended claims and the drawings, a brief description of which follows.
- Fig. 1: is a top plan view of a preferred embodiment of the self-attaching nut of this invention,
- Fig. 2: is a cross-sectional view of the self-attaching nut shown in Fig. 1, in the direction of view arrows 2-2, illustrating a die button and method of installation,
- Fig. 3: is a cross-sectional view of another embodiment of the self-attaching nut of this invention in the direction of view arrows 2-2 in Fig. 1,
- Fig. 4: is a top partially cross-sectioned perspective view of an improved embodiment of the self-attaching nut made by the method of this invention,
- Fig. 5: is a top plan view of the self-attaching nut shown in Fig. 4,
- Fig. 6: is a cross-sectional side view of the self-attaching nut shown in Fig. 5 in the direction of view-arrows 6-6,
- Fig. 7: is a cross-sectional side view of the self-attaching nut shown in Fig. 5 in the direction of view-arrows 7-7,
- Fig. 8A: is a side view of a typical wire section, which is the first stage of the nutblank,
- Fig. 8B: is a side view of the nut blank following initial forming,
- Fig. 8C: is a cross-sectional side view of the nut blank following further forming,
- Fig. 8D: is a cross-section of the nut blank following further forming,
- Fig. 8E: is a side cross-sectional view of the nut blank following further forming,
- Fig. 8F: is a top view of the nut blank shown in Fig. 8E,
- Fig. 9: is a partially cross-sectioned side view of one embodiment of a forming or cold-working punch, which may be used to form the final configuration of the nut groove,
- Fig. 10: is an end view of the punch shown in Fig. 9 in the direction of view-arrows 10-10,
- Fig. 11: is an end perspective view of the punch shown in Figs. 9 and 10,
- Fig. 12: is a partial cross-sectional view of the nut blank shown in Figs. 8E and 8F and the forming punch shown in Figs. 9-11 as the forming punch is received in the nut groove,
- Fig. 13: is a partial cross-sectional side view similar to Fig. 12 after forming of the final configuration of the nut,
- Fig. 14: is a partial cross-sectional view of the punch and nut shown in Fig. 13, in the direction of view-arrows 14-14, and
- Fig. 15: is a partial cross-sectional view of a forming die and nut during forming of the re-entrant groove of the self-attaching nut.

As described above, the preferred embodiments of the self-attaching nut of this invention is a pierce nut 1 preferably having a generally circular or cylindrical shape such that the pierce nut may be fed to the installation tool or head, not shown, without requiring rotational orientation of the nut to the panel. The pierce nut may, however, be octagonal, polygonal or other annular shapes depending upon forming techniques and installation requirements. In the disclosed embodiment, the inner wall or pilot portion 4 includes a shearing or piercing edge 3 and a central screw hole or female threaded bore 2. The nut bore may also smooth to receive self-tapping or thread rolling screws. The cylindrical outer surface 8 of the pilot portion defines the inner wall of the annular groove 5 and the groove is further defined by the outer wall 6 and bottom wall 7.

As described above, the cylindrical outer surface 8 of the pilot is preferably parallel to the axis L of the nut and the threaded bore 2 and defines a continuation of the shearing or piercing edge 3. The annular outer wall 6 or flange portion includes a relatively flat annual panel supporting surface and an inclined conical surface 9 which tapers inwardly toward the pilot portion 4 to define a restricted or "re-entrance" groove having a narrower opening adjacent the panel supporting annual surface. The bottom wall 7 of the groove includes an annular protuberance 11 which extends radially outwardly from the outer surface 8 of the pilot portion to a midportion 10 of the groove bottom wall. The protuberance 11 is integral with the pilot portion 4 strengthening the pilot portion as described above.

Further, as described above, the forming punch used to form the groove 5 includes an end portion which conforms to the shape of the protuberance 11 and the bottom wall 7. Because the protuberance 11 extends radially from the pilot portion 4 to a midportion 10 of the groove bottom wall, the end of the forming punch does not include recessed pockets as required for forming the centrally located protuberances disclosed in the above identified U.S. parent application of this application. Thus, no forming oil or debris remains on the end or tip of the forming punch which may cause incomplete forming of the protuberance. Even if forming oil clings to the forming punch, the oil flows along the cylindrical outer surface 8 of the pilot 4 onto the surface of the protuberance 11 and the oil is released to the outside along the surface 8 of the pilot and there is no resistance from the oil when the protuberance is formed. This assures accurate and complete forming of the protuberance 11.

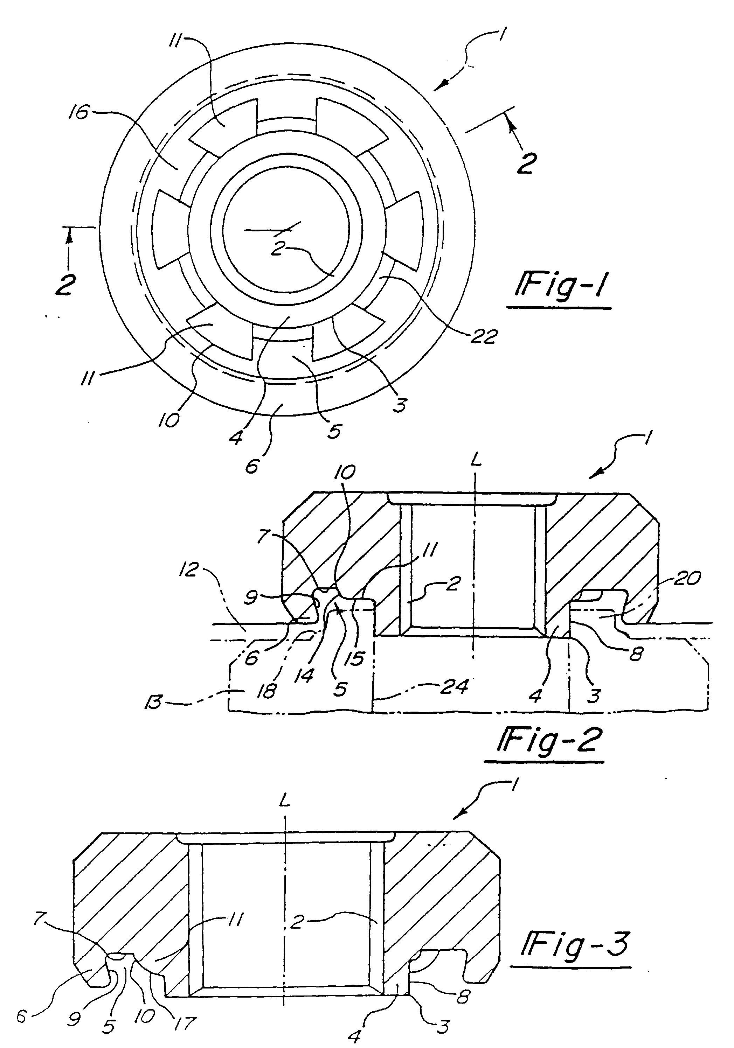

The method of attaching the pierce nut 1 to a metal plate or panel is best shown in Figure 2. The pierce nut is driven into the panel 12 by a reciprocating plunger in an installation head (not shown). The plunger drives the pierce nut parallel to the central axis L. Where the self-attaching nut 1 of this invention is utilized as a pierce nut, the panel is sheared or pierced between the piercing edge 3 of the nut and the 24 opening to the die button 3. As described, the die button 13 includes a central opening 24 which receives the slug pierced from the panel. The annular panel portion surrounding the panel opening is then deformed by the projecting annular lip 20 of the die button 13 into the annular groove 5 against the top surface 15 of the protuberance 11, which thins the annular panel portion and deforms the panel portion radially outwardly against the bottom wall 7 and beneath the inclined surface 9 of the flange portion 6 which defines the outer wall of the groove. Because the protuberance is integral with the pilot portion 4, it is possible in this embodiment to provide a relatively wide space on the bottom wall 7 between the radial outer extent of the protuberance 11 at 10 and the opposed inclined surface 9 of the outer wall of the groove. Further, as shown, the annular groove 5 is wider at the bottom wall 7 than adjacent the opening to the groove.

Thus, during installation of the nut on the panel, the panel metal is caused to flow radially outwardly into the enlarged space at the bottom of the groove 7 beneath the inclined surface 9 as best shown in Figure 2. It should also be noted that the inside surface of the projection 20 is cylindrical and closely conforms to the cylindrical outer surface 8 of the pilot because the outer surface 8 is not inclined as disclosed in the above referenced parent application. Tne annular die button projection 20 is therefore thicker and more robust, significantly reducing die button breakage, as described above. Because the panel metal is deformed radially outwardly into the relatively wide outer bottom wall 7, sufficient pull resistance and rotational resistance can be obtained. The metal plate 12 may also be of varying thickness, including relatively thin panels (e.g. 0.6 mm) to thicker panels (e.g. 2.0 mm) using the same nut size and type and therefore the pierce nut 1 can be designed for common use in various panel thicknesses.

As described above, the die button 13 and particularly the annular projecting lip portion 20 is designed to attach the panel 12 to the pierce nut 1. The die button includes an annular fillet 18 at the peripheral side of the projecting annular lip. This fillet 18 assists in filling the groove with panel metal and is relative thick, such that the die button lip is not weakened, resulting in few instances where the life of the forming punch is shortened due to damage of the lip after long-term use of the die button 13.

Another advantage of the cylindrical outer surface 8 of the pilot 4 and the fact that this cylindrical surface 8 is parallel to the axis L of the nut is to provide a thicker wall for the pilot 4. Further, the panel metal is not deformed radially inwardly against the inside wall of the groove to the extent found with the pierce nut disclosed in the above referenced parent application where the protuberance is in the midportion of the groove bottom wall. It is important, however, to deform the panel metal in contact with the outer surface 8 of the pilot to ensure strong pull out resistance. In this embodiment, therefore, the female thread 2 in the nut bore is not deformed during installation of the nut on the panel.

In the disclosed embodiment of the pierce nut 1 shown in Figure 2, the protuberance 11 includes a flat top surface 15 as shown in Figure 2 and the protuberance includes an annular arcuate surface 14 at the upper radial outer extent of the protuberance at 10. This arcuate surface 14 assists in deforming the panel metal into the bottom wall 7 of the groove as the lip 20 of the die button 13 is driven into the groove and against the flat upper surface 11 of the protuberance. The arcuate surface 14 has been somewhat exaggerated for clarity and is not required to form a good installation.

In the most preferred embodiment, the protuberance 11 comprises a plurality of spaced arcuate or semi-circular protuberances wedge-shaped 11 as best shown in Figure 1. The spaces 16 between the protuberances define channels which provide anti-rotation means for the nut when installed on a panel. That is, the annular portion of the panel which is driven into the groove 5 against the protuberances 11 and the bottom wall 7 is also driven against the bottom wall into the spaces 16 between the protuberances. The bottom wall 7, including the radial channels or spaces 16 between the protuberances, is generally flat. Further, in the disclosed embodiment, the nut includes a plurality of arcuate or semi-circular bridging portions 22 which are integral with the cylindrical outer surface 8 of the pilot portion 4 and the adjacent semi-circular protuberances 11; however, the radial width of the bridging portions 22 is substantially less than the radial width of the protuberances 11 as shown in Figure 1. The bridging portions may be of the same height (measured from the bottom wall 7) as the protuberances 11, as shown in Figure 2. The bridging portions 22 further increase the structural rigidity of the wall which defines the pilot portion 4, thus further reducing the likelihood of deformation of the pilot during installation of the nut on a panel. By increasing the height of the protuberances 11 and the number of spaces 16 between the protuberances, the rotational resistance of the nut on the panel can be increased even more. These areas of discontinuity or channel-shaped spaces 16 are not limited to six places as long as there are multiple spaces between the protuberances and usually between four and six spaces are suitable.

Figure 3 illustrates another embodiment of the pierce nut of the present invention. Except for the shape of the protuberances 11 in the embodiment shown in Figure 3, the remaining formation and substance is the same; therefore, the numbering is applied and further explanation is omitted. In the embodiment shown in Figure 3, the protuberances 17 are circular in cross section and extend from the bottom wall 7 at a midportion 10 to the cylindrical side surface 8 of the wall 4 which defines the pilot portion. A nut and panel assembly utilizing the nut shown in Figure 3 will result in deformation of an annular portion surrounding the panel hole into the nut groove, as described above, wherein the arcuate or circular protuberance causes the metal to flow easily into the comparatively wide bottom wall 7 between the inclined or tapered outer wall surface 9 of the flange portion 6 and the protuberance 11.

The method of installing the self-attaching nut 1 of this invention then includes locating the panel 12 on the die button 13 and orienting the nut 1 opposite the panel and die button with the nut annular groove 5 coaxially aligned with the projecting lip 20 of the die button. As described above, the nut is normally fed through conventional chuting or the like to an installation head having a reciprocal plunger, not shown, wherein the nut is accurately aligned in the plunger passage opposite the die button. The nut 1 is then driven against the panel 12 by a plunger (not shown) and the annular panel portion surrounding the aperture or hole in the panel is then driven into the nut groove 5 by the projecting annular lip 20 of the die button 13. Where the nut is used as a pierce nut, the panel is first pierced by the piercing or shearing edge 3 in cooperation with the edge of the die button adjacent the upper surface of the projecting annular lip and the hole 24 through the die button. As described, the self-attaching nut 1 may also be installed as a clinch nut, wherein the panel opening is first pierced by a punch and the nut is then installed in the panel opening, resulting in the same panel assembly shown. The annular panel portion is then driven by the annular lip 20 of the die button 13 against the upper surface 15 of the protuberance 11 and the panel is thinned and deformed radially outwardly against the groove bottom wall 7 and beneath the inclined surface 9 of the flange portion 6. As will be understood, this description assumes that the nut moves relative to the panel. Alternatively, the nut and panel may be held in place and the die button driven into the panel to perform the same installation sequence described. In either case, there is relative movement and the process will thus be described as the nut moving relative to the panel.

The self-attaching nut, nut and panel assembly and method of installation of this invention therefore achieves the desired advantages over the prior art and provides further improvements over the pierce nut disclosed in the above referenced U.S. parent application. The modification of the protuberance from the midportion of the bottom wall to a protuberance 11 which extends radially from the inner pilot wall 8 to a midportion 10 of the groove and a cylindrical outer wall 8, eliminates entrapment of forming oils and debris from the end of the forming punch, such that the forming oil flows along the outer surface 8 where it is released along this surface and provides no resistance to complete forming of the protuberance. Thus, accurate forming of the protuberance 11 can be achieved and the nut 1 can be fastened on a panel to provide ample pull and rotational resistance. Further, the tapered configuration of the flange portion 6 provides an inclined surface 9 which is narrower at the tip, such that the panel metal is made to flow from the protuberance 11 to the bottom wall 7 and simultaneously outwardly to and beneath the inclined outer wall 9, providing sufficient pull and rotational resistance.

Moreover, a cylindrical outer surface 8 of the pilot 4, which is parallel to the nut axis L, eliminates radially inwardly directed deformation forces as the panel is deformed in the groove, which could deform the female thread 2 in the nut bore. Deformation of the threaded bore is also lessened by increasing the width 7 of the bottom wall of the groove 5 between the radial outer extent 10 of the protuberance 11 and the outer inclined surface 9 of the nut groove 5. Further, locating the protuberance at or adjacent the inner wall 8 provides a wider surface 7 for the bottom wall, providing greater pull resistance and enabling the use of a relatively thick annular projection 20 on the die button 13, improving die life and reducing die breakage. Finally, providing a plurality of channel-shaped spaces 16 between the protuberances 11 provides for improved torque resistance, wherein the panel metal is deformed against the bottom wall at 16 into the radial channels between the adjacent protuberances 11. As will be understood, further modifications may be made to the disclosed self-attaching nut fastener, method of installation and the resultant nut and panel assembly within the purview of the appended claims. As described, the shape or configuration of the protuberances and the number of protuberances and spaces between the protuberances may be modified for particular applications.

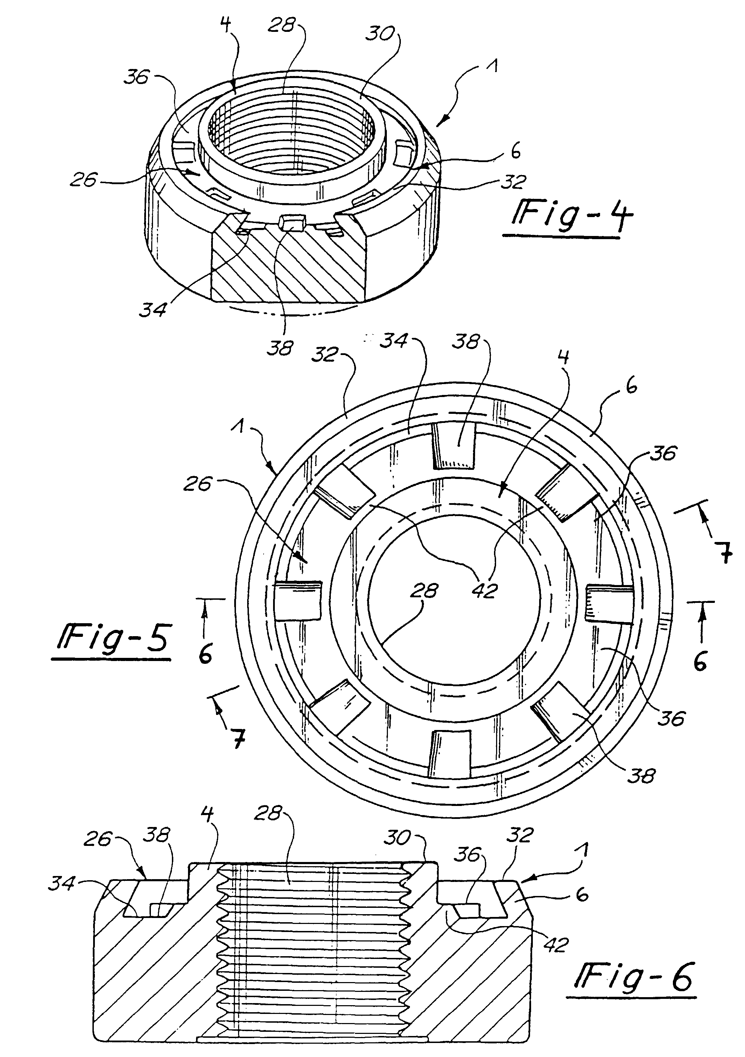

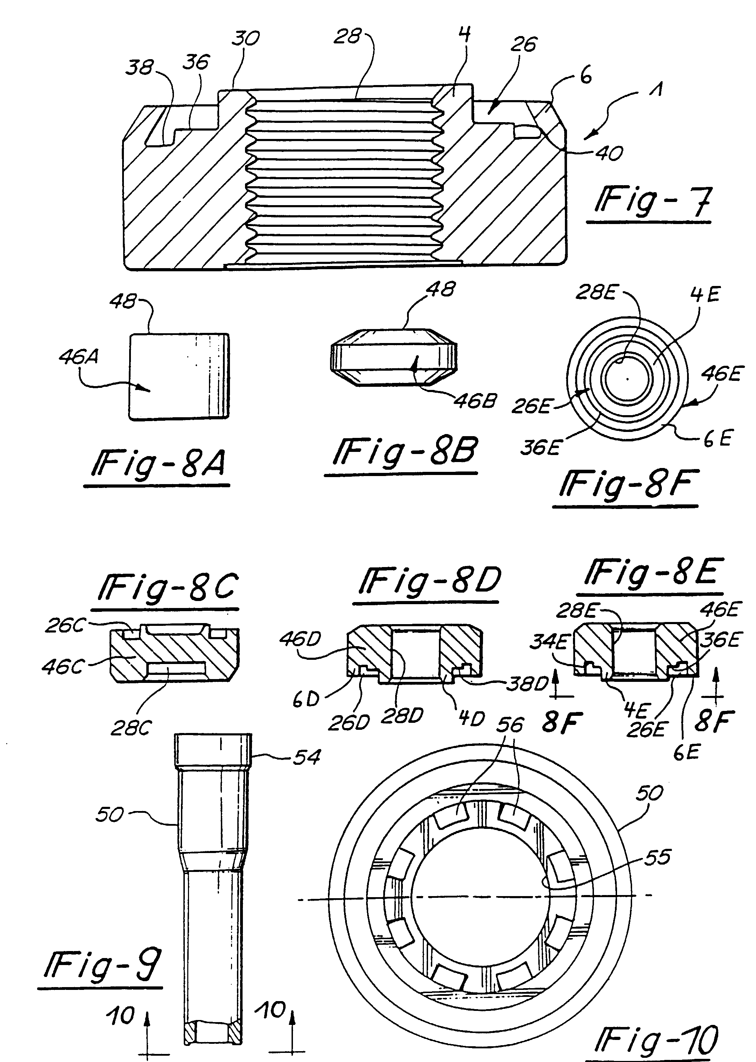

The preferred self-attaching nut 1 of this invention is best shown in Figs. 1 to 4, wherein the nut includes a central annular pilot portion 4, an annular flange portion 6 which surrounds the pilot portion 4 and an annular groove 26 in the flange portion which surrounds the pilot portion. As shown, the nut 1 includes an internally threaded axial bore 28; however, as described above, the bore 28 may also be unthreaded or cylindrical to receive a self-tapping or thread rolling screw or bolt. Where the self-attaching nut is used as a pierce nut, the free-end 30 of the pilot portion 4 is preferably spaced above the plane of the flange portion 6, as best shown in Figs. 6 and 7. During installation of the pierce nut, the pilot portion 4 in cooperation with a die button (not shown) pierces a hole in the metal panel (not shown) as described in the above-identified copending applications. The panel is then received on the panel supporting surface 32 of the flange portion 6 and the panel is deformed by the die button into the nut groove 26. In the preferred embodiments of the self-attaching nut 1, the flange portion 6 is inclined inwardly toward the pilot portion 4 to define a restricted opening to the groove 26, which is referred to as a re-entrant groove. As the panel metal is deformed into the groove 26 by the die button (not shown) the panel metal is deformed beneath the inner surface of the inclined flange portion, forming a very secure mechanical interlock between the panel and the self-attaching nut 20.

In the preferred embodiment of the self-attaching nut 1, the bottom wall 34 of the groove 26 includes a plurality of circumferentially spaced protuberances 36 separated by radial channels 38. The protuberances 38 are integral with the pilot portion 4 and extend radially to a midportion of the groove bottom wall 34, spaced from the inclined outer wall of the groove, which is defined by flange portion 24. The radial outer surfaces 40 of the protuberances 36 may be perpendicular to the bottom wall 34, as shown in Fig. 7, inclined radially outwardly or arcuate to direct panel metal against the bottom wall 36 and beneath the inclined outer wall 24. The bottom wall 34 of the groove further includes semicircular bridging portions 42, which are integral with the pilot portion and the adjacent protuberances 36, as best shown in Figs. 5 and 6. These bridging portions 42 further strengthen the pilot portion 4 during installation of the nut as a pierce nut, wherein the pilot pierces an opening in the panel (not shown). Thus, the bridging portions 42 would not be required where the self-attaching nut 1 is used as a clinch nut, wherein the pilot 4 may be of the same height as the flange portion 6. The bridging portions 42 further confine the channels 36, forming contained pockets as shown in Fig. 5, which improves the torque resistance of the nut when installed in a panel.

As described above, problems developed with forming the self-attaching nut described in the EP application. More specifically, the tool life was not sufficient for mass production applications wherein the configuration of the bottom wall of the groove, including the circumferentially spaced protuberances, was formed with a single die or machined in the bottom wall of the groove. The method of this invention substantially improves tool life, without sacrificing the benefits of the self-attaching nut 1 of this invention. Figs. 8A to 8F illustrate the initial forming steps of the nut blank. Fig. 8A illustrates the first stage of the nut blank 46A, which in the disclosed embodiment is a cylindrical wire of cold heading quality steel, such as SAE 1010 or 1015 CHQ. The wire has been cut to length, such that the metal volume is equal to the volume of the finished self-attaching nut, except for the metal pierced out of the axial bore 28. As will be understood by those skilled in the art, the ends 48 of the cut wire are not completely flat and therefore the nut blank ends 48 are first reformed to form the nut blank 46B shown in Fig. 8B. The nut bore 28C and the annular nut groove 26C is then partially formed in the nut blank 46C,as shown in Fig. 8C. The nut bore 28D is then pierced through the nut and the pilot portion 4D. The bottom wall of the groove 26D is simultaneously reformed to form a continuous annular protuberance 36D. The protuberance 36D is formed integral with the pilot portion 4D to substantially reduce breakage of the punch which forms the groove bottom wall as shown in Fig. 8D. Where the protuberance was spaced from the inner and outer walls of the groove, the forming punch included a pocket or pockets which entrapped oil and other debris, causing breakage of the punch. Forming the protuberance 36D integral with the pilot eliminated the pockets, thus substantially reducing punch breakage. As will be understood by those skilled in the art, the forming end of the punch which forms the bottom wall of the groove as shown in Fig. 8D does not include pockets and thus forming oils are permitted to easily escape from the groove during formation of the groove bottom wall. The nut blank 46D is then qualified and finally sized as shown in Figs. 8E and 8F.

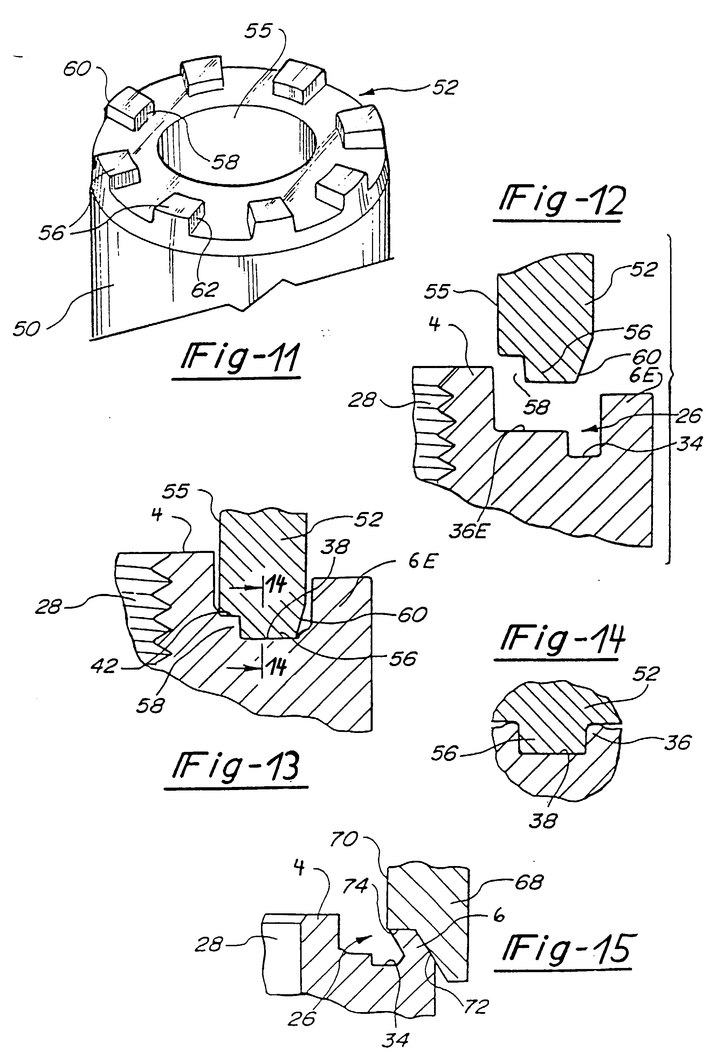

As shown in Fig. 8E and 8F, the nut blank 46E includes a central annular pilot portion 4E, an annular flange portion 6E and an annular groove 26E in the flange portion which encircles the pilot portion 4E. The bottom wall 34E includes an annular protuberance 36E integral with the pilot portion 4E which extends radially to a midportion of the groove bottom wall. As used herein, "midportion" defines a location between the pilot portion and the groove outer wall, spaced from the groove outer wall to receive panel metal. The nut bore 28E is unthreaded, but may be threaded as a final operation, as described above. The protuberance 36E is then reformed with the forming punch or cold heading tool 50 shown in Figs. 9 to 11.

The forming punch 50 shown in Figs. 9 to 11 includes a forming end portion 52 best shown in Figs. 10 and 11. The forming punch further includes a chuck portion 54 for attachment to a conventional die press. As shown in Figs. 10 and 11, the forming end 52 of the punch includes a central axial bore 55 and a plurality of circumferentially spaced generally rectangular projections 56. In the preferred embodiment, the generally trapezoidal projections are spaced slightly from the axial bore 54 to form the bridging portions 42 in the nut bottom wall 42, as described hereinbelow. Further, the total area of the projections 56 is preferably less than the total area between the projections, such that the circumferentially spaced protuberances 36 formed between the projections have a greater total area than the channels or pockets 38 formed by the projections. The radial inner and outer surfaces 58 and 60, respectively, of the projections 56 are arcuate and the side faces 62 are generally planar. As best shown in Figs. 12 and 13, the radial inner and outer surfaces 58 and 60 may be perpendicular to the bottom wall 34 or tapered toward the free end of the punch. The diameter of the axial bore 55 telescopically receives the pilot portion 4 of the nut during forming of the circumferentially spaced protuberances, as now described.

Referring to Figs. 12 to 14, the forming end 52 of the forming punch is driven into the nut groove 26 against the continuous annular protuberance 36E, deforming the spaced protuberances 36 and forming the radial channels 38, as best shown in Fig. 14. That is, the generally trapezoidal projections 56 of the forming punch deform the protuberance 36, forming radial channels 38 and thereby circumferentially spaced protuberances 36, as shown in Figs. 4 to 7. This reforming of the continuous protuberance 36E substantially improves tool life without substantially sacrificing the torque resistance of the self-attaching nut 1. As shown in Fig. 13, the punch is driven into the protuberance until the projection 45 is substantially flush with the bottom wall; however, the metal which flows from the protuberance forms a parting line.

Fig. 15 illustrates the formation of the inclined flange portion 6, which is preferably formed after formation of the circumferentially spaced protuberances 36. The cold working die member 68 includes an axial bore 70, an inside chamfered surface 72, which is tapered inwardly from the end of the die member toward the axis of the bore 70, and a radial step 74 which reforms the panel supporting free end of the flange portion 24. Thus, the re-entrant groove 26 is formed by driving the chamfered surface 72 of the die member 68 against the outer surface of the flange portion 74, which deforms the free end of the flange portion 6 radially inwardly toward the pilot portion 4 and the radial surface 74 then reforms the free end 32 of the flange portion 6 generally parallel to the free end 30 of the pilot portion 4.

The method of this invention then includes forming a metal nut blank generally as shown in Fig. 8E, including an annular pilot portion 4E, an annular flange portion 6E and an annular groove 26E having a continuous annular protrusion 36E preferably integral with the pilot portion 4E and which extends radially from the pilot portion 4E to a midportion of the groove, spaced from the flange portion 6E. The method then includes driving a forming punch 50 into the annular groove 26 as shown in Fig. 12. The forming punch includes a forming end portion 52 having a plurality of circumferentially spaced projections 56, which are driven against the continuous annular protrusion 36E to form a plurality of circumferentially spaced annular protrusions 36 and radial channels 38 formed by the projections 56. In the most preferred embodiment of the method, projections 56 are generally trapezoidal having inclined radial inner and outer surfaces 58 and 60, respectively, and spaced from the bore 55. The radial channels 38 are thus formed spaced from the pilot portion 4, as shown in Fig. 5, including semi-circular bridging portions 42 integral with the pilot portion and the adjacent circumferentially spaced protuberances 36 as shown in Fig. 5. The method then includes deforming the transverse flange portions 6E (Figs. 11 and 12) radially inwardly as shown in Fig. 15, by driving a cold working die member 68 having a chamfered surface 72 against the flange portions as shown in Fig. 15. This forms a re-entrant groove 26 having a restricted opening to the bottom wall 34, which provides a secure mechanical interlock between the panel (not shown) and the self-attaching nut 1. Nut bore 28 may be threaded in the blank form as shown in Figs. 12 and 13, or more preferably, the nut may be threaded in a final step as indicated by Fig. 15. Alternatively, the nut bore may be unthreaded for receipt of a self-tapping or thread rolling screw or bolt.

## Claims

1. A self-attaching nut fastener (1) for attachment to a plastically deformable metal panel, said fastener having a central pilot portion (4;30), a flange portion (6) generally surrounding said pilot portion having a generally flat annular panel-supporting end face (32), and an annular groove (5;26) defined in said flange end face surrounding said pilot portion (4;30), said groove having opposed inner and outer side walls (8,9) and a bottom wall (7;34), said outer groove side wall (a) being generally inclined towards said pilot portion (4;30) to define a restricted opening to said groove bottom wall (7;34), said groove bottom wall (7;34) including a plurality of spaced protuberances (11;36), said protuberances (11;36) extending circumferentially around said pilot portion (4;30), characterized in that said protuberances (11;36) are integral with an outer surface of said pilot portion (4;30) which defines said groove inner side wall (8) and extend radially to a midportion of said groove bottom wall, or beyond the radial center of said groove bottom wall (7;34), while being spaced from said groove outer wall, to direct panel metal radially outwardly beneath said inclined groove outer wall as said panel is deformed in said groove against said bottom wall as said nut fastener is attached to said panel, in that a plurality of spaced radial channels extend from said inclined outer groove side wall (9) between said protuberances (11;36), and in that the outer side wall of said pilot portion (4;30) extends perpendicular to said groove bottom wall (7;34).

2. The self-attaching nut fastener defined in claim 1, characterised in that said groove bottom wall includes part-annular bridging portions (22;42) integral with said pilot outer surface and adjacent said protuberances (11;36), said bridging portions (22;42) having a radial width substantially less than said protuberances (11;36).

3. The self-attaching nut fastener defined in claim 1 or claim 2, characterised in that said protuberances are wedge-shaped, generally semi-circular, each having a longer outer circumferential end surface opposite said groove outer wall than adjacent said pilot portion (4;30).

4. A self-attaching fastener in accordance with any one of the preceding claims, in particular a self-piercing and clinching nut fastener, wherein said pilot portion (4;30) has an end face spaced above the plane of said flange portion end face (32) and a generally cylindrical outer side face defining the inner wall of said groove.

5. A self-attaching nut fastener (1) in accordance with any one of the preceding claims, in combination with a metal panel, thus forming a nut fastener and panel assembly, said panel (12) having an opening receiving said pilot portion (4;30) therethrough and an annular panel portion surrounding said panel opening deformed in said nut fastener annular groove against said groove bottom wall, against said protuberances (11;36), and against said bottom wall (7;34) into said radial channels between said protuberances (11;36), thus preventing relative rotation of said nut fastener (1) on said panel (12), and also extending radially inwardly against said groove inner side wall (8) and radially outwardly against said groove outer side wall (9) beneath said inclined portion of said groove outer side wall (9) forming a secure mechanical interlock between said panel and said nut fastener.

6. A method of making a self-attaching nut fastener (1), said nut fastener including a central pilot portion (4;30) having a generally cylindrical axial bore (2,28) therethrough, an annular panel-supporting flange portion (6) generally surrounding said pilot portion (4;30), and an annular groove (5,26) in said flange portion surrounding said pilot portion (4;30) having opposed inner and outer side walls (8,9) and a bottom wall (7;34), said method comprising the following steps:
forming a metal nut blank including said pilot portion (4;30), annular flange portion (6) and said annular groove (5,26) having a continuous annular protrusion (36E) integral with said groove bottom wall (34E;7;34) encircling said groove inner side wall (8) and spaced from said groove outer side wall (9) ;
then driving a forming punch (50) into said groove against said annular protrusion (36E), the forming punch having a forming end portion (52) including a plurality of circumferentially spaced projections (56), said projections deforming said continuous annular protrusion (36E) and forming a plurality of spaced annular protuberances (11;36) on said groove bottom wall (34E;7;34) including radial channels (38) between said protuberances (11;36), said continuous annular protrusion (36E) of said nut blank being integral with said pilot portion (4;30) and said pilot portion (4;30) including a generally cylindrical outer surface which defines said groove inner side wall (8), and said punch forming end portion (52) having a central axial generally cylindrical bore (55) telescopically receivable over said pilot, and said method including driving said punch into said groove, telescopically receiving said pilot portion in said punch bore (55) and forming said circumferentially spaced protuberances (11;36), and then deforming an outer surface of said flange portion (6) spaced axially from the plane of said groove bottom wall (34E;7;34) radially inwardly toward said pilot portion (4;30) thus forming an inclined inner surface on said groove outer wall spaced from an opposed surface of said circumferentially spaced protrusions (11;36) and a restricted annular opening to said groove bottom wall (34E;7;34).

## Patentansprüche

1. Selbstsicherndes Muttern-Befestigungselement (1) zur Befestigung an einer plastisch verformbaren Metalltafel, wobei das Befestigungselement einen zentralen Führungsabschnitt (4 ; 30), einen Flanschabschnitt (6), der den Führungsabschnitt im wesentlichen umgibt und eine im wesentlichen flache ringförmige Tafelaufnahmestirnfläche (32) aufweist, und eine ringförmige Nut (5; 26) umfaßt, die in der Flanschseitenfläche definiert ist, die den Führungsabschnitt (4; 30) umgibt, wobei die Nut gegenüberliegende innere und äußere Seitenwände (8, 9) und eine Bodenwand (7; 34) aufweist, wobei die äußere Nutseitenwand (a) im wesentlichen in Richtung des Führungsabschnitts (4; 30) geneigt ist, um eine beschränkte Öffnung zu der Nutbodenwand (7 ; 34) zu definieren, wobei die Nutbodenwand (7; 34) eine Vielzahl von beabstandeten Ausstülpungen (11; 36) umfaßt, wobei sich die Ausstülpungen (11; 36) um den Umfang des Führungsabschnitts (4 ; 30) erstrecken,
dadurch **gekennzeichnet,**
daß die Ausstülpungen (11; 36) mit einer Außenfläche des Führungsabschnittes (4; 30) einstückig ausgebildet sind, welche die Nutinnenseitenwand (8) definiert, und sich radial zu einem Mittelabschnitt der Nutbodenwand oder über das Radialzentrum der Nutbodenwand (7; 34) hinaus erstrecken, während sie von der Nutaußenwand beabstandet sind, um Tafelmetall radial nach außen unter die geneigte Nutaußenwand zu lenken, wenn die Tafel in die Nut an der Bodenwand verformt wird, wenn das Muttern-Befestigungselement an der Tafel befestigt wird, daß sich eine Vielzahl von beabstandeten radialen Kanälen von der geneigten äußeren Nutseitenwand (9) zwischen den Ausstülpungen (11; 36) erstreckt, und daß sich die Außenseitenwand des Führungsabschnittes (4; 30) senkrecht zu der Nutbodenwand (7 ; 34) erstreckt.

2. Selbstsicherndes Muttern-Befestigungselement nach Anspruch 1,
dadurch **gekennzeichnet,**
daß die Nutbodenwand teilweise ringförmige Brückenabschnitte (22 ; 42) umfaßt, die mit der Führungsaußenfläche einstückig ausgebildet und benachbart der Ausstülpungen (11; 36) vorgesehen sind, wobei die Brückenabschnitte (22 ; 42) eine radiale Breite aufweisen, die im wesentlichen kleiner als die der Ausstülpungen (11; 36) ist.

3. Selbstsicherndes Muttern-Befestigungselement nach Anspruch 1 oder Anspruch 2,
dadurch **gekennzeichnet,**
daß die Ausstülpungen keilförmig und im wesentlichen halbkreisförmig sind, wobei jede eine längere Außenumfangsstimfläche gegenüberliegend der Nutaußenwand aufweist, als benachbart des Führungsabschnittes (4; 30).

4. Selbstsicherndes Befestigungselement nach einem der vorhergehenden Ansprüche,
insbesondere ein Selbstdurchstech- und Stauch-Muttern-Befestigungselement, wobei der Führungsabschnitt (4; 30) eine Stirnfläche aufweist, die über der Ebene der Flanschabschnittsstirnfläche (32) beabstandet ist, und eine im wesentlichen zylindrische Außenseitenfläche aufweist, welche die Innenwand der Nut definiert.

5. Selbstsicherndes Muttern-Befestigungselement (1) in Übereinstimmung mit einem der vorhergehenden Ansprüche, in Verbindung mit einer Metalltafel, wodurch ein Muttern-Befestigungselement- und Tafelaufbau gebildet wird, wobei die Tafel (12) eine Öffnung aufweist, die den Führungsabschnitt (4; 30) durch diese aufnimmt, und einen ringförmigen Tafelabschnitt aufweist, der die Tafelöffnung umgibt und der in der ringförmigen Nut des Muttern-Befestigungselementes gegen die Nutbodenwand, gegen die Ausstülpungen (11; 36) und gegen die Bodenwand (7; 34) in die radialen Kanäle zwischen den Ausstülpungen (11; 36) verformt wird, wodurch eine relative Drehung des Muttern-Befestigungselementes (1) an der Tafel (12) verhindert wird, und der sich auch radial nach innen an die Nutinnenseitenwand (8) und radial nach außen an die Nutaußenseitenwand (9) unter den geneigten Abschnitt der Nutaußenseitenwand (9) erstreckt, der eine sichere mechanische Verriegelung zwischen der Tafel und dem Muttern-Befestigungselement bildet.

6. Verfahren zum Herstellen eines selbstsichernden Muttern-Befestigungselementes (1), wobei das Muttern-Befestigungselement einen zentralen Führungsabschnitt (4; 30) umfaßt, der eine im wesentlichen zylindrische Axialbohrung (2, 28) hindurch aufweist, einen ringförmigen Tafelaufnahmeflanschabschnitt (6) umfaßt, der den Führungsabschnitt (4; 30) im wesentlichen umgibt, und eine ringförmige Nut (5, 26) in dem Flanschabschnitt umfaßt, die den Führungsabschnitt (4; 30) umgibt und gegenüberliegende Innen- und Außenseitenwände (8, 9) und eine Bodenwand (7; 34) aufweist, wobei das Verfahren die folgenden Schritte umfaßt, daß:
ein Metallmutternrohling geformt wird, der den Führungsabschnitt (4; 30), den ringförmigen Flanschabschnitt (6) und die ringförmige Nut (5, 26) umfaßt, die eine kontinuierliche ringförmige Ausstülpung (36E) einstückig mit der Nutbodenwand (34E; 7; 34) aufweist, welche die Nutinnenseitenwand (8) umgibt und von der Nutaußenseitenwand (9) beabstandet ist;
dann eine Formungsstanzeinrichtung (50) in die Nut gegen die ringförmige Ausstülpung (36E) getrieben wird, wobei die Formungsstanzeinrichtung einen Formungsstirnabschnitt (52) aufweist, der eine Vielzahl von sich um den Umfang erstreckenden beabstandeten Vorsprüngen (56) aufweist, wobei die Vorsprünge die kontinuierliche ringförmige Ausstülpung (36E) verformen und eine Vielzahl von beabstandeten ringförmigen Ausstülpungen (11; 36) an der Nutbodenwand (34E; 7; 34) formen, die radiale Kanäle (38) zwischen den Ausstülpungen (11; 36) aufweist, wobei die kontinuierliche ringförmige Ausstülpung (36E) des Mutternrohlings einstückig mit dem Führungsabschnitt (4; 30) ausgebildet ist, und der Führungsabschnitt (4 ; 30) eine im wesentlichen zylindrische Außenfläche umfaßt, welche die Nutinnenseitenwand (8) definiert, und wobei der Stanzformungsstirnabschnitt (52) eine axiale im wesentlichen zylindrische Zentralbohrung (55) aufweist, die zusammenschiebbar über die Führung aufnehmbar ist, und wobei das Verfahren umfaßt, daß die Stanzeinrichtung in die Nut getrieben wird, der Führungsabschnitt in der Stanzeinrichtungsbohrung (55) zusammenschiebbar aufgenommen wird und die sich um den Umfang erstreckenden beabstandeten Ausstülpungen (11; 36) geformt werden, und dann eine Außenfläche des Flanschabschnittes (6), die axial von der Ebene der Nutbodenwand (34E; 7; 34) beabstandet ist, radial nach innen in Richtung des Führungsabschnittes (4; 30) verformt wird, wodurch eine geneigte Innenfläche an der Nutaußenwand geformt wird, die von einer gegenüberliegenden Fläche der sich um den Umfang erstreckenden, beabstandeten Ausstülpungen (11; 36) beabstandet ist, und eine beschränkte ringförmige Öffnung zu der Nutbodenwand (34E; 7; 34) geformt wird.

## Revendications

1. Écrou de fixation autosertissable (1) destiné à être attaché sur un panneau de métal déformable de façon plastique, ledit élément de fixation comportant une partie pilote centrale (4 ; 30), une partie de bride (6) qui entoure généralement ladite partie pilote et possédant une face terminale annulaire généralement plane de support de panneau (32), et une rainure annulaire (5 ; 26) définie dans ladite face terminale de bride en entourant ladite partie pilote (4 ; 30), ladite rainure possédant des parois latérales intérieure et extérieure opposées (8, 9) et une paroi de fond (7 ; 34), ladite paroi latérale extérieure (a) étant généralement inclinée vers ladite partie pilote (4 ; 30) pour définir une ouverture restreinte vers ladite paroi de fond de ladite gorge (7 ; 34), ladite paroi de fond (7 ; 34) comportant une pluralité de protubérances espacées (11 ; 36), lesdites protubérances (11 ; 36) s'étendant de manière circonférentielle autour de ladite partie pilote (4 ; 30), caractérisé en ce que lesdites protubérances (11 ; 36) sont intégrées avec une surface extérieure de ladite partie pilote (4 ; 30) qui définit ladite paroi latérale intérieure de la gorge (8) et s'étendent radialement jusqu'à une partie médiane de ladite paroi de fond de la gorge, ou au-delà du centre radial de ladite paroi de fond de la gorge (7 ; 34), tout en étant espacées de ladite paroi extérieure de la gorge, afin de diriger le métal du panneau radialement vers l'extérieur au-dessous de ladite paroi extérieure inclinée de la gorge tandis que ledit panneau est déformé dans ladite gorge contre ladite paroi de fond lorsqu'on attache ledit écrou de fixation sur ledit panneau, en ce qu'une pluralité de canaux radiaux espacés s'étendent depuis ladite paroi latérale extérieure inclinée de la gorge (9) entre lesdites protubérances (11 ; 36), et en ce que la paroi latérale extérieure de ladite partie pilote (4 ; 30) s'étend perpendiculairement à ladite paroi de fond de la gorge (7 ; 34).

2. Écrou autosertissable selon la revendication 1, caractérisé en ce que ladite paroi de fond de la rainure inclut des parties de pontage partiellement annulaires (22 ; 42) intégrées avec ladite surface extérieure pilote et adjacentes auxdites protubérances (11; 36), lesdites parties de pontage (22 ; 42) ayant une largeur radiale sensiblement inférieure auxdites protubérances (11; 36).

3. Écrou autosertissable selon l'une ou l'autre des revendications 1 et 2, caractérisé en ce que lesdites protubérances sont en forme de coin, généralement semi-circulaires, ayant chacune une surface terminale extérieure circonférentielle plus longue à l'opposé de ladite paroi extérieure de rainure qu'en position adjacente à ladite partie pilote (4 ; 30).

4. Écrou autosertissable selon l'une quelconque des revendications précédentes, en particulier écrou auto-foreur et à blocage, dans lequel ladite partie pilote (4 ; 30) comporte une face terminale espacée au-dessus du plan de ladite face terminale de la partie de bride (32) et une face latérale extérieure généralement cylindrique qui définit la paroi intérieure de ladite rainure.

5. Écrou autosertissable (1) selon l'une quelconque des revendications précédentes, en combinaison avec un panneau de métal, formant ainsi un ensemble formé d'un écrou et d'un panneau, ledit panneau (12) ayant une ouverture qui reçoit ladite partie pilote (4 ; 30) à travers elle-même et une partie de panneau annulaire qui entoure ladite ouverture de panneau en étant déformée dans ladite rainure annulaire de l'écrou contre ladite paroi de fond de la rainure, contre lesdites protubérances (11 ; 36), et contre ladite paroi de fond (7 ; 34) jusque dans lesdits canaux radiaux entre lesdites protubérances (11 ; 36), empêchant ainsi une rotation relative dudit écrou (1) sur ledit panneau (12), et s'étendant également radialement vers l'intérieur contre ladite paroi latérale intérieure de rainure (8) et radialement vers l'extérieur contre ladite paroi latérale extérieure de rainure (9) au-dessous de ladite partie inclinée de la paroi latérale extérieure de rainure (9) en formant un verrouillage mécanique sûr entre ledit panneau et ledit écrou.

6. Procédé pour réaliser un écrou autosertissable (1), ledit écrou comprenant une partie pilote centrale (4 ; 30) traversée par un perçage axial généralement cylindrique (2, 28), une partie de bride annulaire (6) destinée à supporter un panneau, laquelle entoure généralement ladite partie pilote (4 ; 30), et une rainure annulaire (5, 26) dans ladite partie de bride qui entoure ladite partie pilote (4 ; 30) ayant des parois latérales intérieure et extérieure opposées (8,9) et une paroi de fond (7 ; 34), ledit procédé comprenant les étapes suivantes :
on forme un flan d'écrou en métal qui inclut ladite partie pilote (4 ; 30), une partie de bride annulaire (6), et ladite rainure annulaire (5, 26), en présentant une saillie annulaire continue (36E) intégrale avec ladite paroi de fond de gorge (34E ; 7 ; 34) qui entoure ladite paroi latérale intérieure de rainure (8) et espacée de ladite paroi latérale extérieure de rainure (9) ;
on enfonce un poinçon de formage (50) jusque dans ladite rainure et contre ladite saillie annulaire (36E), le poinçon de formage comportant une partie terminale de formage (52) qui inclut une pluralité de projections espacées à la circonférence (56), lesdites projections déformant ladite saillie annulaire continue (36E) et formant une pluralité de protubérances annulaires espacées (11 ; 36) sur ladite paroi de fond de la rainure (34E ; 7 ; 34) en incluant des canaux radiaux (38) entre lesdites protubérances (11 ; 36), ladite saillie annulaire continue (36E) dudit flanc d'écrou étant intégrale avec ladite partie pilote (4 ; 30), et ladite partie pilote (4 ; 30) incluant une surface extérieure généralement cylindrique qui définit la paroi latérale intérieure de ladite rainure (8), et ledit poinçon formant une partie terminale (52) ayant un perçage central axial généralement cylindrique (55) susceptible d'être reçu de façon télescopique sur ledit pilote, et ledit procédé comprenant les étapes consistant à enfoncer ledit poinçon jusque dans la rainure, en recevant de façon télescopique ladite partie pilote dans ledit perçage de poinçon (55) et à former lesdites protubérances espacées à la circonférence (11 ; 36), et à déformer une surface extérieure de ladite partie de bride (6) espacée axialement depuis le plan de la paroi de fond de la rainure (34E ; 7 ; 34) radialement vers l'intérieur en direction de ladite partie pilote (4 ; 30), formant ainsi une surface intérieure inclinée sur la paroi extérieure de rainure, espacée d'une surface opposée des protubérances espacées à la circonférence (11 ; 36), et une ouverture annulaire restreinte vers ladite paroi de fond de la rainure (34E ; 7 ; 34).
